# EUROPEAN PATENT APPLICATION

(11) **EP 2 105 846 A1**
(43) Date of publication of application: **30.09.2009**
(21) Application number: 08006114.6
(22) Date of filing: 28.03.2008
(51) Int. Cl.: G06F 17/30

(54) **Method of recommending content items**

(71) Applicant: Sony Corporation, Tokyo 108-0075 (JP)
(72) Inventor: Hagg, Wilhelm, 70327 Stuttgart (DE); Eggink, Jana, 70327 Stuttgart (DE)
(74) Representative: Müller - Hoffmann & Partner

(57) **Abstract**

A method of content recommendation , comprising: providing a search query of a user to a search engine based on a search term; determining a search result based on the search term, the search result comprising a plurality of content items; ranking the content items depending on user data of the user; displaying the content items according to their ranking.

## Description

### METHOD OF CONTENT RECOMMENDATION

An embodiment of the invention relates to a method of content recommendation. Further embodiments of the invention relate to a client device and to a server device for content recommendation.

### BACKGROUND

Using databases for getting information becomes more and more important both in the private and in the professional domain. For example, for searching the World Wide Web search engines exist which return the most relevant web pages based on a search query of a user. Due to the very high number of web pages returned from the search engine finding the specific information in which the respective user is interested may be very time-consuming.

It is an object to provide a method of content recommendation. Further objects are to provide a respective server device and a respective client device for content recommendation. These objects are solved by claims 1, 13, 14 and 15, respectively.

Further details will become apparent from a consideration of the drawings and ensuing description.

### BRIEF DESCRIPTION OF THE SEVERAL VIEWS OF THE DRAWINGS

Fig. 1 illustrates a method of content recommendation according to an embodiment;
Fig. 2 serves to illustrate a method of content recommendation according to a further embodiment;
Fig. 3 illustrates a client device according to a further embodiment interacting with a server device;
Fig. 4 illustrates a server device according to a further embodiment interacting with a client device;and
Fig. 5 illustrates a server device according to a further embodiment interacting with a second server device and a client device.

### DETAILED DESCRIPTION

In the following, embodiments are described. All described embodiments may be combined in any way, i.e. there is no limitation that certain described embodiments may not be combined with others. Further, it should be noted that same reference signs throughout the figures denote same or similar elements.

In the following embodiments a method and devices for recommending content items, e.g. web pages, movies, music and the like, are described where the search engine searches the web or other data bases and the search result comprises a plurality of content items. The content items may be movies and the searched database may be a movie database where an electronic program guide is searched.

It should be noted that the following examples relate to a search of the web, wherein as a search result web pages are returned. The explained principles are, however, not at all limited to searching the web and web pages. In fact, any data base may be searched and any kind of content items may be returned.

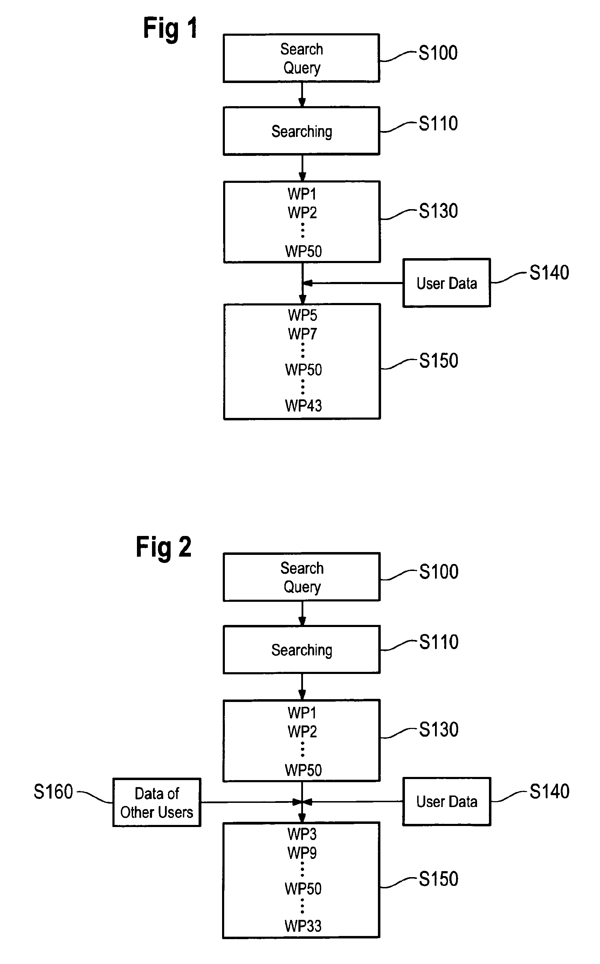

In Fig. 1, at S 100, a user provides a search query to a search engine which is configured to search the World Wide Web. The search query is based on a search term or on a plurality of search terms provided by the user. At S 110, the search is conducted by the search engine based on the respective search term or the respective search terms. At S 130, a search result is determined, wherein the search result comprises a plurality of web pages. As illustrated, the search result may comprise fifty web pages WP 1, WP 2, ..., WP 50. At S 140, user data are provided and the web pages of the search result determined at S 130 are ranked (re-ordered) depending on the user data. At S 150, the web pages are displayed according to their ranking, e.g. WP 5, WP 7, ..., WP 50, ..., WP 43.

The search engine may search for content types such as text, photos, music and/or videos or any other content. The user data may comprise a user profile which again may comprise objective user data. Objective user data may be data characterizing the user's personage such as his age, gender, interests etc.. The user profile may also or alternatively include data representing a usage history of the respective user. The usage history may reflect web actions of the user in the past, e.g. what kind of web pages the respective user has accessed in the past and/or how long he has had access to the respective web pages. For ranking the found web pages depending on the user data the user profile may be matched against a profile of each respective web page.

Fig. 2 illustrates a further embodiment of the invention where, at S160, in addition to the data of the user providing the search query data of other users of the search engine are taken into consideration for ranking the web pages of the search result. The users taken into consideration may be users with similar interests as the user who makes the search query. The similarity of the users may be determined on the basis of the usage history or user profile of the users. The ranking of a respective web page may then depend on the number of users with similar interests who have accessed the respective web page.

The data of the other users can be also used to determine a profile of a respective web page, e.g. by averaging the profile of all users who have accessed the respective web page. For ranking the found web pages the user profile of the user entering the search query is then matched against the profile of the respective web pages, and web pages with a better match are displayed before web pages with an inferior match.

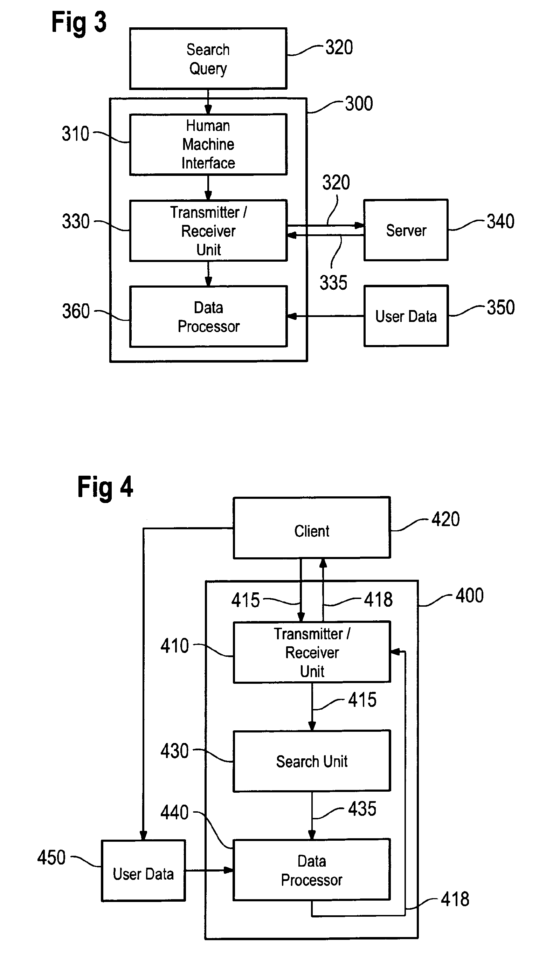

Fig. 3 illustrates a client device 300 of an embodiment of the invention. The client device comprises a human machine interface 310 which is so configured that a search query 320 can be inputted. A transmitter/receiver unit 330 is provided which is configured to send the search query 320 to a server 340 and to receive a search result 335 comprising a list of web pages from the server based on the search query. A data processor 360 is provided which re-orders the list of the web pages by taking into consideration user data 350 of the respective user making the search query. The user data may be a user profile containing objective user data such as age, gender etc. which are specified by the respective user. The user data may also or alternatively be data reflecting the usage history of the respective user. In this case the data processor 360 may be also configured to aggregate the data which are needed for creating the usage history. For matching the user data against a profile of each respective web page, the profile data of the respective web pages may be provided from the server 340 to the client device 300, attached to each respective web page. In addition or alternatively, data of other users may be provided from the server 340, for example data which are adequate for finding users with similar interests as the respective user.

Fig. 4 illustrates a server device 400 of a further embodiment of the invention. The server device 400 comprises a transmitter/receiver unit 410 which is configured to receive a search query 415 from a client device 420 and to send a re-ordered list 418 of web pages back to the client device 420. A search unit 430 is provided which is configured to provide a list 435 of web pages based on the search query 415. The search unit 430 may comprise a search engine. The server device 400 also comprises a data processor 440 which is configured to re-order the list 415 of web pages by taking into consideration user data 450 of the respective user of the client device. The user data 450 may be provided by the client device 420 with each access to the server device 400 for starting a search query. The re-ordered list 418 is transmitted to the transmitter/receiver unit 410 and is sent back to the client device 420 where at least a part of the re-ordered list 418 may be displayed to the user. Thus, in contrast to an embodiment comprising a client device illustrated in Fig. 3, in this embodiment the re-ordering of the list of web pages is done by the server device 400 and the re-ordered list 418 is transmitted to the client device 420. Also or alternatively, data of other users can be used for re-ordering the list of web pages.

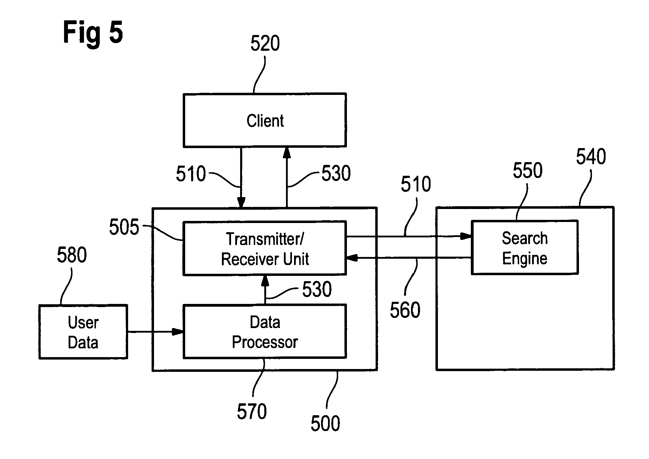

Fig. 5 illustrates a server device 500 of a further embodiment. The server device 500 comprises a transmitter/receiver unit 505 which is configured to receive a search query 510 from a client device 520 and to send a re-ordered list 530 of content items, e.g. web pages, back to the client device 520. In contrast to the embodiment shown in Fig. 4 of the drawings, the search is not conducted by the server device 500, but by a second server device 540 which comprises a search unit 550. For that purpose the server device 500 transmits the search query 510 to the second server device 540 and receives a search result 560 comprising a plurality of content items. The server device 500 also comprises a data processor 570 which is configured to re-order the list of content items by taking into consideration user data 580 of the respective user of the client device 520. The re-ordered list 530 is transmitted to the transmitter/receiver unit 505 and is sent back to the client device 520 where at least a part of the re-ordered list 530 may be displayed to the user.

In a further embodiment, it may also be possible, that at the server, a re-ordering is done only based on user profiles of other user, and at the client device a further re-ordering is done based on the user profile of a user of the client device.

The following elucidation may help to get a better understanding of the above and further embodiments of the invention:

User preference may be considered in two different ways. The first option is to generate a user profile. Such a profile might contain different information about the user such as age, gender, interests, and so on. A profile might also contain any information about the user that is reflected by the user behavior such as duration on a web page, consumption of media such as music and so on.

In order to consider a users preference, the profile may be matched against the profile of the item under consideration such as a web page. The item profile might be generated by averaging the profiles of all visitors/consumers of that item. Based on the match of the profiles, the search results may be ranked in a way that items with the best match are shown first. Alternatively the profile match score might be combined with the score from the search.

If profile data for users are not available, a collaborative filtering approach might be used as a second option for considering user preferences. The ranking of an item in the search result will then depend on the number of visitors/consumers with a similar interest. These users with a similar interest can be identified using standard collaborative filtering techniques, which are based on finding similarities in the usage history of multiple users.

In order to enable profile based ranking the profile information need to be attached to the corresponding database item. For the collaborative filtering approach the search engine can easily access this information from the clients as long as the user is identified in some way, e.g. by a cookie. The user might still be anonymous as only the set of items consumed/visited by that user need to be known. In the first case profile data has to be provided along with each access of the search engine. This does not necessarily mean that the search engine itself has to aggregate the profile information. A frontend could do the profile aggregation and just use the search engine in the background for getting the results. The results would then be ranked by the frontend. Such a frontend could be again a server application or alternatively a peer to peer solution that stores all profile information on a shared virtual memory area of the peer to peer system.

## Claims

1. A method of content recommendation, comprising:
providing a search query of a user to a search engine based on a search term;
determining a search result based on the search term, the search result comprising a plurality of content items;
ranking the content items depending on user data of the user;
displaying the content items according to their ranking.

2. The method of claim 1, wherein the content items are ranked depending on data of other users of the search engine.

3. The method of claim 2, wherein the other users are users with similar interests as the user who makes the search query.

4. The method of any of the preceding claims, wherein the content items are ranked depending on a user profile of the user.

5. The method of claim 4, wherein the user profile of the user comprises objective user data.

6. The method of any of the preceding claims, wherein the user data comprise data representing a usage history of the respective user.

7. The method of any of the preceding claims, wherein ranking depends on the number of other users of the search engine who have accessed the respective content item.

8. The method of any of claims 3 to 7, wherein users with a similar interest are users with similarities in their respective usage histories.

9. The method of any of claims 3 to 8, wherein users with a similar interest are users with similar objective user data.

10. The method of any of the preceding claims, wherein the content items are ranked by the same device which is used for inputting the search query, and the search result is determined by another device.

11. The method of any of the preceding claims, wherein the search engine searches the web and the content items are web pages.

12. The method of any of claims 1 to 11, wherein the search engine searches an electronic program guide of a movie database and the content items are movies.

13. A client device for content recommendation, comprising:
a human machine interface configured to input a search query;
a transmitter/receiver unit configured to send the search query to a server, and further configured to receive a list of content items from the server, the list depending on the search query;
a data processor configured to re-order the list depending on user data of a user of the client device.

14. A server device for content recommendation, comprising:
a transmitter/receiver unit configured to receive a search query from a client device, and further configured to send a re-ordered list of content items to the client device;
a search unit configured to provide a list of content items based on the search query;
a data processor configured to determine said re-ordered list by re-ordering the list of content items depending on user data of a user of the client device.

15. A server device for content recommendation comprising:
a transmitter/receiver unit configured to receive a search query from a client device, to send the search query to a second client device, to receive a list of content items from the second server device, and further configured to send a re-ordered list of content items to the client device; and further comprising
a data processor configured to determine said re-ordered list by re-ordering the list of content items received from the second server device depending on user data of a user of the client device.

16. A computer program product including computer program instructions that cause a computer to execute a method of content recommendation, comprising:
providing a search query of a user to a search engine based on a search term;
determining a search result based on the search term, the search result comprising a plurality of content items;
ranking the content items depending on user data of the user;
displaying the content items according to their ranking.

17. Computer readable storage medium,
comprising a computer program product according to claim 15.
